# EUROPÄISCHE PATENTANMELDUNG

(11) **EP 3 232 542 A1**
(43) Veröffentlichungstag der Anmeldung: **18.10.2017**
(21) Anmeldenummer: 17163491.8
(22) Anmeldetag: 29.03.2017
(51) Int. Cl.: H02K 5/02, H02K 5/08, H02K 5/15, H02K 15/14, H02K 5/10, H02K 3/52, H02K 5/173

(54) **ELEKTRONISCH KOMMUTIERTER GLEICHSTROMMOTOR MIT EINZELPOLEN**

(30) Priorität: 15.04.2016 DE 102016206397
(71) Anmelder: Bühler Motor GmbH, 90459 Nürnberg (DE)
(72) Erfinder: DIETRICH, Nikolaus, 90461 Nürnberg (DE); Guttenberger, Richard, 91171 Greding (DE)

(57) **Zusammenfassung**

Die Erfindung betrifft einen elektronisch kommutierten Gleichstrommotor (1), mit einem Gehäuse (5), einem Gehäusedeckel (10), einem Lagerschild (6), einem Rotor (2) und einem Stator (3), wobei der Rotor (2) eine Welle (7) und einen Permanentmagnet (20) umfasst und der Stator (3) aus Einzelpolen (22) besteht, welche mit einer Polisolierung (23) versehen sind. Aufgabe der Erfindung ist es bei einem gattungsgemäßen Gleichstrommotor mit Einzelpolen für eine bauraumsparende Verbindung von Motorbestandteilen oder Anbauteilen mit dem Gehäuse zu sorgen, wobei keine zusätzlichen Verbindungs- oder Dichtelemente erforderlich sind, wobei eine sehr feste und bei Bedarf dichte Verbindung herstellbar ist und eine einfache Integration weiterer Funktionen und Schnittstellen möglich wird. Dabei soll im Übrigen ein sehr wirtschaftliches Verfahren eingesetzt werden, das für hohe Stückzahlen geeignet ist. Diese Aufgabe wird erfindungsgemäß durch die Merkmale des Anspruchs 1 gelöst.

## Beschreibung

Die Erfindung betrifft einen elektronisch kommutierten Gleichstrommotor (1), mit einem Gehäuse (5), einem Gehäusedeckel (10), einem Lagerschild (6), einem Rotor (2) und einem Stator (3), wobei der Rotor (2) eine Welle (7) und einen Permanentmagnet (20) umfasst und der Stator (3) aus Einzelpolen (22) besteht, welche mit einer Polisolierung (23) versehen sind.

Aus der DE 60102011 T2 ist ein gattungsgemäßer elektronisch kommutierter Gleichstrommotor bekannt, bei welchem das Gehäuse durch Urformen hergestellt ist, wobei der Stator mit dem Gehäuse gefügt wird. Diese Herstellungsweise erfordert einen erheblichen Werkzeugaufwand und ist insbesondere bei einer großen Anzahl an Gehäusevarianten und geringerer Stückzahl unwirtschaftlich.

Aufgabe der Erfindung ist es bei einem gattungsgemäßen Gleichstrommotor mit Einzelpolen für eine bauraumsparende Verbindung von Motorbestandteilen oder Anbauteilen mit dem Gehäuse zu sorgen, wobei keine zusätzlichen Verbindungs- oder Dichtelemente erforderlich sind, wobei eine sehr feste und bei Bedarf dichte Verbindung herstellbar ist und eine einfache Integration weiterer Funktionen und Schnittstellen möglich wird. Dabei soll im Übrigen ein sehr wirtschaftliches Verfahren eingesetzt werden, das für hohe Stückzahlen geeignet ist.

Diese Aufgabe wird erfindungsgemäß durch die Merkmale des Anspruchs 1 gelöst. Durch das vorgefertigte Gehäuse, Lagerschild und Gehäusedeckel, welche aus einem technischen Kunststoffmaterial bestehen, können gewöhnliche Spritzgussverfahren zur Herstellung des Gehäuses verwendet werden. Die Verwendung von Kunststoffgehäusen ermöglicht es das Gehäuse auf einfache Weise ohne Zusatzelemente abzudichten (falls erforderlich) und eine ausreichend feste Verbindung der Gehäuseteile untereinander und/oder mit Anbauteilen herzustellen. Die im Wesentlichen zylindermantelförmige Außenkontur des Gehäuses erlaubt eine einfache Herstellung dieser Verbindung.

Weiterbildungen der Erfindung werden in den Unteransprüchen dargestellt. Der Stator kann im Gehäuse eingepresst sein, wie aus dem Stand der Technik bekannt. Eine zusätzliche Befestigungsmöglichkeit besteht bei Verwendung von Kunststoffgehäusen, indem auch die Polisolierung mit dem Gehäuse verschweißt werden kann. Insbesondere kann durch ein Schweißverfahren für eine verbindungselementfreie und bei Bedarf sehr dichte Verbindung hergestellt werden, bei der keine zusätzlichen Dichtungselemente erforderlich sind. Dadurch kann, gerade bei geteiltem Stator, mit einer Vielzahl Einzelpolen eine deutlich verbesserte Stabilität erreicht werden. Die zylindermantelförmige Außenkontur erlaubt es eine Schweißnaht durch Drehen des Gehäuses vollumfänglich herzustellen.

Ein besonders geeignetes Schweißverfahren zur Verbindung eines Kunststoffgehäuses mit Motorbestandteilen ist das Laser-Durchstrahlschweißen. Dies ist ein bewährtes Verfahren um Kunststoffteile miteinander zu verbinden. Das Gehäusematerial besteht hierzu aus einem für Laserlicht transparenten Material, während das zu verbindende Bauelement aus einem dasselbe Laserlicht absorbierenden Material besteht.

Gemäß einer Weiterbildung der Erfindung ist vorgesehen, dass die Statorisolierung mit dem Gehäuse unmittelbar verschweißt wird. Die Statorisolierung kann über eine durchgehende Schweißnaht oder vorzugsweise drei oder über eine der Statorpolzahl entsprechende Anzahl von Schweißbereichen mit dem Motorgehäuse verschweißt sein. Dabei ist der Außendurchmesser der Statorisolierung größer als der Innendurchmesser des Motorgehäuses im Schweißbereich. Hierdurch ergibt sich eine Presspassung zwischen dem Motorgehäuse und der Statorisolierung. Ein von außen auf das Motorgehäuse gerichteter Laserstrahl durchdringt dieses nur geringfügig abgeschwächt und trifft auf den Schweißbereich der Statorisolierung, wird dort größtenteils absorbiert und erwärmt somit den Schweißbereich und das angrenzende Motorgehäuse bis das Kunststoffmaterial schmilzt. Durch die Presspassung bewegen sich das Motorgehäuse und die Statorisolierung im Schweißbereich geringfügig aufeinander zu und verbinden sich innig miteinander. Um eine gute Schweißverbindung herzustellen muss der gesamte Bereich, in welchem die Schweißpartner aneinander anliegen, erwärmt werden. Hierzu ist die Breite des Schweißbereichs an den Durchmesser des Laserstrahls angepasst. Weiter kann auch die Strahlführung an die Breite der Schweißbereiche angepasst werden, indem der Laserstrahl eine hin- und hergehende Axialbewegung ausführt.

Es wird vorgeschlagen die Statorisolierung nur an einer Seite des Stators am Motorgehäuse anzubinden, dadurch können durch Temperaturschwankungen verursachte Verlängerungen oder Verkürzungen des Statorblechpakets gegenüber dem Motorgehäuse ausgeglichen werden.

Auf ähnliche Weise kann auch das Lagerschild mit dem Gehäuse verschweißt werden. Hier ist jedoch kein Temperaturausgleich zu einer metallischen Baugruppe erforderlich. Höhere Anforderungen bestehen jedoch hinsichtlich einer Dichtfunktion. Daher kann und soll eine Schweißnaht an dieser Stelle vollumfänglich hergestellt werden.

Auch bei der Verschweißung von Gehäuse und Lagerschild sind gemäß einer ersten Ausführungsform Kunststoffmaterialien vorgesehen, die für die Laserstrahlen des verwendeten Lasers in unterschiedlichem Maße durchlässig bzw. absorbierend sind. Das Gehäuse besteht zumindest im Schweißbereich stets aus einem das Laserlicht weitgehend durchlassenden Material, während das Lagerschild oder die Statorisolierung aus einem die Laserstrahlung absorbierenden Material oder eine gut absorbierende Beschichtung aufweist.

Alternativ hierzu besteht auch die Möglichkeit beide Fügepartner aus einem im Wesentlichen für das Laserlicht durchlässigen Material auszuführen. Hierbei sind besondere Maßnahmen erforderlich um dennoch eine ausreichend feste und dichte Verbindung herzustellen. Dabei sollte der Laserstrahl sehr gut fokussiert sein und seine höchste Energiedichte in der Schweißstelle konzentriert sein. Um dennoch eine sichere Schweißverbindung zu erreichen ist weiter vorgesehen den Laserstrahl so zu beeinflussen, dass der Bereich höchster Energiedichte in z-Richtung moduliert wird. Zugleich muss darauf geachtet werden, dass die Oberfläche des Gehäuses nicht verformt wird. Es darf also kein zu hoher Energieeintrag im oberflächennahen Bereich erfolgen. Die verwendete Schweißeinrichtung weist daher eine modulierbare Linsenmechanik auf, wobei eine Kollimationslinse oder eine Fokussierlinse eine Oszillationsbewegung entlang der z-Achse ausführt. Der Transmissions- bzw. Absorptionsgrad ist so zu wählen, dass eine ausreichende Erwärmung der Schweißstelle möglich ist ohne die Oberfläche des Gehäuses zu beschädigen. Für das beschriebene Schweißverfahren eignet sich ein Infrarotlaser aus dem Wellenlängenbereich zwischen 0,7 und 2,5 Mikrometer.

Die Produktivität kann gesteigert werden, wenn die Statorisolierung und das Lagerschild in einem Arbeitsgang parallel geschweißt werden.

Ausführungsbeispiele der Erfindung werden nachfolgend anhand der Zeichnung näher erläutert. Es zeigen:
- Fig. 1: eine Schnittansicht eines Teils eines erfindungsgemäßen Gleichstrommotors,
- Fig. 2: eine Ansicht eines Stators,
- Fig. 3: eine Ansicht einer bewickelten Polkette,
- Fig. 4: eine Seitenansicht eines bewickelten Einzelpols,
- Fig. 5: eine erste Polisolierung,
- Fig. 6: eine zweite Polisolierung,
- Fig. 7: eine Schnittansicht durch einen erfindungsgemäßen Gleichstrommotor,
- Fig. 8: eine vergrößerte Einzelheit A aus Fig. 7 und
- Fig. 9: eine vergrößerte Einzelheit B aus Fig. 7.

Hinweis: Bezugszeichen mit Index und entsprechende Bezugszeichen ohne Apostroph bezeichnen namensgleiche Einzelheiten in den Zeichnungen und der Zeichnungsbeschreibung. Es kann sich darüber hinaus um die Verwendung in einer anderen Ausführungsform, dem Stand der Technik oder einer Variante handeln. Die Ansprüche, die Beschreibungseinleitung, die Bezugszeichenliste und die Zusammenfassung enthalten der Einfachheit halber nur Bezugszeichen ohne Index.

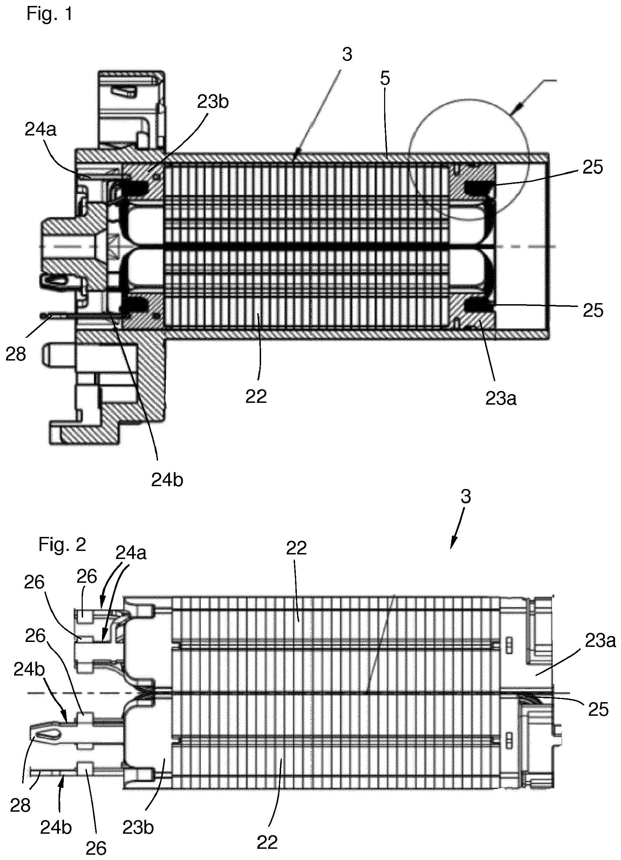

Fig. 1 zeigt eine Schnittansicht eines Teils eines Gleichstrommotors, mit einem Gehäuse 5 und einem Stator 3, welcher aus mehreren Einzelpolen 22, Polspulen 25 und einer Polisolierung 23a, 23b besteht. Die Polspulen 25 sind elektrisch und mechanisch mit Kontaktelementen 24a, 24b verbunden. Das Gehäuse 5 besteht aus einem technischen Kunststoffmaterial, ebenso wie die Polisolierung 23a, 23b. Der Stator 3 ist über die Polisolierung 23a, 23b am Gehäuse 5 verschweißt. Das Gehäuse 5 besteht aus einem für Laserlicht durchlässigem Material. Die Polisolierung 23a, 23b besteht aus einem das Laserlicht absorbierendem Material. Zusätzlich ist ein Anschlusskontakt 28 dargestellt.

Fig. 2 zeigt eine Ansicht eines Stators 3 gemäß Fig. 1, mit den Einzelpolen 22 und der Polisolierung 23a, 23b. Die Einzelpole 22 bestehen hier aus Polblechpaketen, wobei die Einzelbleche durch Stanzpaketierung gefügt sind. Die Polisolierung 23b weist zusätzlich Kontaktelemente 24a, 24b auf, mit welchen die Polspule 25 elektrisch und mechanisch verbunden ist. Die Kontaktelemente 24a, 24b weisen Crimpkontakte 26 auf, die als umgebogene Zungen ausgebildet sind und Drahtenden der Polspulen 25 mechanisch halten (alternativ können die Drahtenden geschweißt oder ohne umgebogene Zungen gebondet sein) und elektrisch mit dem Kontaktelement 24 verbinden. Die Kontaktelemente 24a, 24b sind in Ausnehmungen der Polisolierung 23 eingepresst. Die Kontaktelemente 24b weisen zusätzlich Anschlusskontakte 28 auf, über welche die Stromzufuhr erfolgt.

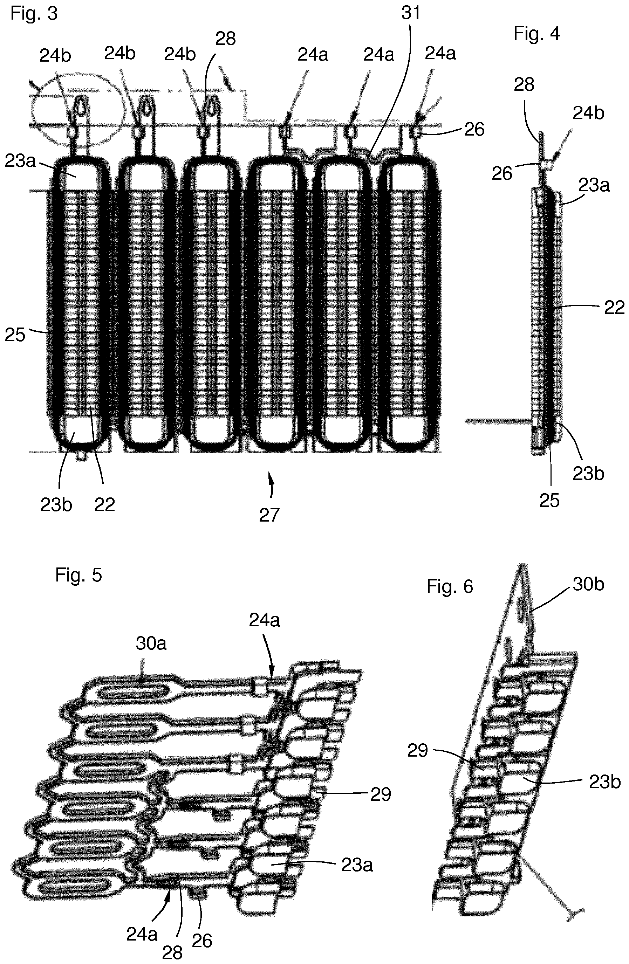

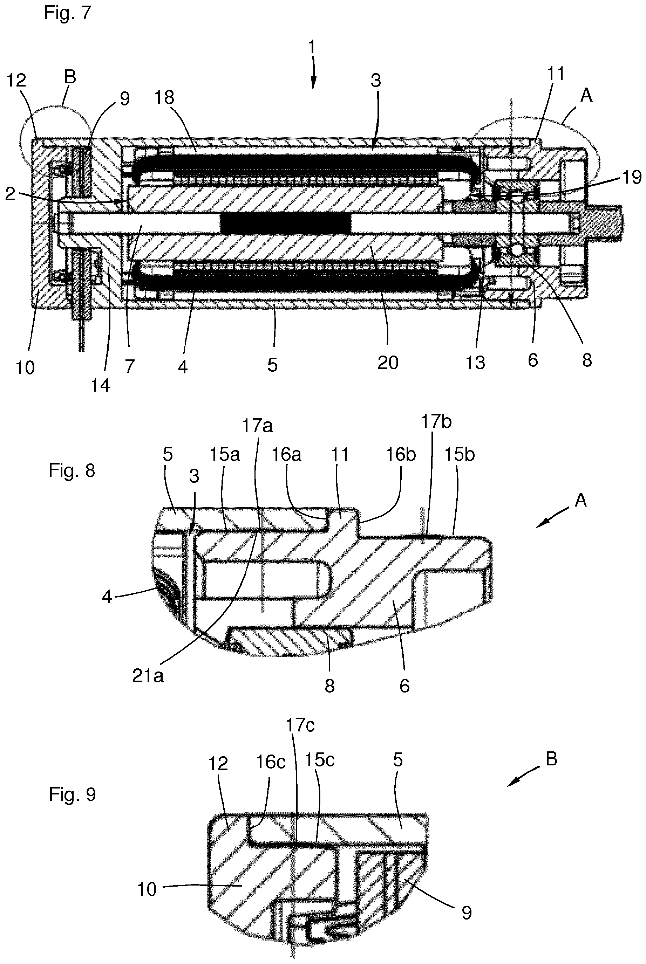

Fig. 3 zeigt eine Ansicht einer bewickelten Polkette 27. Die Polkette 27 besteht aus mehreren Einzelpolen 22, die jeweils aus einem Polblechpaket bestehen und durch die Polisolierung 23a, 23b zu einer Kette verbunden sind. Hierzu sind Filmscharniere zwischen den einzelnen Polisolierungen 23a, 23b vorgesehen. Die Polisolierungen 23a, 23b sind mit Nutauskleidungen 29 einstückig (siehe Fig. 5 und 6), welche in Nuten um die Einzelpole 22 geschoben sind. Um diese Nutauskleidungen 29 der Polisolierung 23 und um die Einzelpole 22 sind die Polspulen 25 gewickelt und deren Enden an den Kontaktelementen 24a, 24b, insbesondere deren Crimpkontakten 26 (alternativ können die Drahtenden geschweißt oder ohne umgebogene Zungen gebondet sein) angeschlossen. Ein Teil der Kontaktelemente 24 kann durch Stege 31 zu einem Sternpunkt elektrisch verbunden sein. Die Gesamtheit aller Polspulen 25 bilden zusammen die Statorwicklung 4 (siehe Fig. 1, 7). Die Gesamtheit aller Polisolierungen 23 bilden zusammen die Statorisolierung 19 (Siehe Fig. 7).

Fig. 4 zeigt eine Seitenansicht eines Einzelpols 22, mit den Polisolierungen 23a, 23b, dem Kontaktelement 24b, mit Crimpkontakt 26, Anschlusskontakt 28 und der Polspule 25.

Fig. 5 und 6 zeigen die Polisolierungen 23a bzw. 23b. Diese sind mit Nutauskleidungen 29 einstückig. Die Polisolierung 23a ist mit Kontaktelementen 24a, 24b bestückt, welche über Montagehilfsmittel 30a miteinander temporär verbunden sind. Die Polisolierungen 23b weisen Montagehilfsmittel 30b auf, die als Halterung während des Wickelvorgangs dienen.

Fig. 7 zeigt eine Schnittansicht durch einen erfindungsgemäßen Gleichstrommotor 1, mit einem Gehäuse 5, einem Stator 3, einem Lagerschild 6, einem Rotor 2, einer Zwischenwand 14, einer Leiterplatte 9 und einem Gehäusedeckel 10. Der Stator 3 umfasst ein Statorblechpaket 18, eine Statorisolierung 19 und eine Statorwicklung 4. Der Rotor 2 umfasst einen hohlzylindrischen Permanentmagneten 20, eine Welle 7 und eine Abstandsbuchse 13 und ist in einer Zwischenwand 14 einerseits und in einem Kugellager 8 im Lagerschild 6 andererseits drehbeweglich gelagert. Das Lagerschild 6 weist einen Bundring 11 auf, an welchem das Gehäuse 5 axial anliegt.

Fig. 8 zeigt eine vergrößerte Einzelheit A aus Fig. 7, mit dem Lagerschild 6, dem Kugellager 8, dem Stator 3, der Statorwicklung 4 und dem Gehäuse 5. Der Lagerschild 6 umfasst den Bundring 11, welcher von einer ersten Schulterfläche 16a und einer zweiten Schulterfläche 16b axial begrenzt ist, einem ersten Schaft 15a und einen zweiten Schaft 15b. Der erste und der zweite Schaft 15a, 15b weisen Schweißbereiche 17a, 17b auf, welche als im Durchmesser vergrößerter Bereiche ausgebildet sind. Der Außendurchmesser des Lagerschildschweißbereichs 17a ist vor der Montage größer als der Innendurchmesser des Gehäuseschweißbereichs 21.

Das Gehäuse 5 und der Lagerschild 6 überlappen sich axial im Bereich des Schaftes 15a und das Gehäuse 5 liegt an der ersten Schulterfläche 16a an. Der zweite Schaft 15b dient zur Befestigung eines Anbauteils. Das Anbauteil kann ein Getriebe oder eine Pumpe sein. Es besteht die Möglichkeit ein Hohlrad eines Planetengetriebes unmittelbar auf den Schaft 15b des Lagerschilds 6 zu verschweißen. Hierzu ist der Lagerschildschweißbereich 17b vorgesehen. Der Außendurchmesser des Lagerschildschweißbereichs 17b ist vor der Montage größer als der Innendurchmesser eines Hohlradschweißbereichs. Nach einem Einpressen des Lagerschilds 6 in das Gehäuse 5 sind diese Bauteile gegeneinander verspannt. Die Verspannung löst sich teilweise durch Erhitzung und Aufschmelzen der Schweißbereiche 17a und 21 a. Dabei bewegen sich beide Teile radial geringfügig aufeinander zu und verbinden sich innig miteinander. Bei Herstellung einer vollumfänglichen Schweißnaht entsteht eine hermetisch dichte Schweißnaht. Die Schulterfläche 16b dient als Axialbegrenzung für das Hohlrad.

Fig. 9 zeigt eine vergrößerte Einzelzeit B aus Fig. 7, mit dem Gehäuse 5, dem Gehäusedeckel 10 und der Leiterplatte 9. Der Gehäusedeckel 10 weist einen flanschartigen Rand 12 auf, welcher von einer Schulterfläche 16c begrenzt ist. Das Gehäuse 5 liegt axial an der Schulterfläche 16c an und ist einstückig mit der Zwischenwand 14. Das Gehäuse 5, die Zwischenwand 14 und der Gehäusedeckel 10 bilden einen Aufnahmeraum für die Leiterplatte 9. Weiter umfasst der Gehäusedeckel 10 einen Schaft 15c, der einen Lagerschildschweißbereich 17c aufweist. Der Außendurchmesser des Lagerschildschweißbereichs 17c ist vor der Montage größere als der Innendurchmesser eines Gehäuseschweißbereichs 21 im Berührungsbereich auf.

### Bezugszeichenliste

- 1: Gleichstrommotor
- 2: Rotor
- 3: Stator
- 4: Statorwicklung
- 5: Gehäuse
- 6: Lagerschild
- 7: Welle
- 8: Kugellager
- 9: Leiterplatte
- 10: Gehäusedeckel
- 11: Bundring
- 12: Rand
- 13: Abstandsbuchse
- 14: Zwischenwand
- 15: Schaft
- 16: Schulterfläche
- 17: Lagerschildschweißbereich
- 18: Statorblechpaket
- 19: Statorisolierung
- 20: Permanentmagnet
- 21: Gehäuseschweißbereich
- 22: Einzelpol
- 23: Polisolierung
- 24: Kontaktelement
- 25: Polspule
- 26: Crimpkontakt
- 27: Polkette
- 28: Anschlusskontakt
- 29: Nutauskleidung
- 30: Montagehilfsmittel
- 31: Steg

## Patentansprüche

1. Elektronisch kommutierter Gleichstrommotor (1), mit einem Gehäuse (5), einem Gehäusedeckel (10), einem Lagerschild (6), einem Rotor (2) und einem Stator (3), wobei der Rotor (2) eine Welle (7) und einen Permanentmagnet (20) umfasst und der Stator (3) aus Einzelpolen (22) besteht, welche mit einer Polisolierung (23) versehen sind, **dadurch gekennzeichnet, dass** das Gehäuse (5), das Lagerschild (6) und der Gehäusedeckel (10) vorgefertigt sind, das Gehäuse (5) eine im Wesentlichen zylindermantelförmige Außenkontur aufweist und das Gehäuse (5), das Lagerschild (6) und der Gehäusedeckel (10) aus einem technischen Kunststoffmaterial bestehen.

2. Gleichstrommotor nach Anspruch 1, **dadurch gekennzeichnet, dass** der Stator (3) im Gehäuse (5) eingepresst ist.

3. Gleichstrommotor nach Anspruch 1 oder 2, **dadurch gekennzeichnet, dass** die Einzelpole (22) durch die Polisolierung (23) am Gehäuse (5) befestigt sind.

4. Gleichstrommotor nach Anspruch 3, **dadurch gekennzeichnet, dass** die Polisolierung (23) mit dem Gehäuse (5) verschweißt ist.

5. Gleichstrommotor nach Anspruch 1, 2, 3 oder 4, **dadurch gekennzeichnet, dass** das Lagerschild (6) und/oder der Gehäusedeckel (10) mit dem Gehäuse (5) verschweißt ist/sind.

6. Gleichstrommotor nach zumindest einem der vorangehenden Ansprüche, **dadurch gekennzeichnet, dass** die Polisolierung (23) und/oder das Lagerschild (6) und/oder der Gehäusedeckel (10) mittels Laser-Durchstrahlschweißen mit dem Gehäuse (5) verbunden ist/sind.

7. Gleichstrommotor nach zumindest einem der vorangehenden Ansprüche, **dadurch gekennzeichnet, dass** die Breite der Schweißbereiche und die Breite eines Laserstrahls oder die Strahlführung aufeinander abgestimmt sind.

8. Gleichstrommotor nach zumindest einem der vorangehenden Ansprüche, **dadurch gekennzeichnet, dass** die Polisolierung (23) nur an einer Seite des Stators (3) am Gehäuse (5) anzubinden ist.

9. Gleichstrommotor nach zumindest einem der vorangehenden Ansprüche, **dadurch gekennzeichnet, dass** das Gehäuse (5) zumindest in dessen Gehäuseschweißbereich (21) aus einem für Laserstrahlen durchlässigen Kunststoffmaterial besteht.

10. Gleichstrommotor nach zumindest einem der vorangehenden Ansprüche, **dadurch gekennzeichnet, dass** das Lagerschild (6) zumindest im Lagerschildschweißbereich (17) aus einem dasselbe Laserlicht absorbierendem Material besteht oder eine dasselbe Laserlicht absorbierende Beschichtung aufweist.

11. Gleichstrommotor nach zumindest einem der vorangehenden Ansprüche, **dadurch gekennzeichnet, dass** das Lagerschild (6) zumindest im Lagerschildschweißbereich (17) für dieselben Laserstrahlen durchlässig ist.

12. Gleichstrommotor nach zumindest einem der vorangehenden Ansprüche, **dadurch gekennzeichnet, dass** der Laserstrahl während des Schweißvorgangs moduliert wird, so dass der Brennpunkt in z-Richtung oszilliert.

13. Gleichstrommotor nach zumindest einem der vorangehenden Ansprüche, **dadurch gekennzeichnet, dass** die Statorisolierung (19) und das Lagerschild (6) in einem Arbeitsgang parallel geschweißt werden.
